# EUROPEAN PATENT APPLICATION

(11) **EP 4 467 029 A2**
(43) Date of publication of application: **27.11.2024**
(21) Application number: 24192958.7
(22) Date of filing: 28.08.2020
(51) Int. Cl.: A24F 40/60

(54) **HEATING STATUS INDICATOR AND HEATING METHOD FOR AEROSOL GENERATING DEVICE**

(30) Priority: 05.09.2019 EP 19195548; 11.03.2020 EP 20162546
(62) Divisional of application: 20761599.8
(71) Applicant: JT International SA, 1202 Geneva (CH)
(72) Inventor: BOUCHUIGUIR, Layth Sliman, Bellevue (CH); GARCIA GARCIA, Eduardo Jose, Grand-Saconnex (CH)
(74) Representative: Gill Jennings & Every LLP

(57) **Abstract**

An aerosol generating device comprising: a heating chamber (2) arranged to hold an aerosol generating medium (5); a heater (6) arranged, in use, to heat the heating chamber (2); a visual indicator (11 - 14) for indicating at least when a heating-up of the chamber has reached a use temperature; wherein said visual indicator comprises a light emitting indicator that is progressively lit during heating-up.

## Description

### TECHNICAL FIELD

The present invention relates to an aerosol generating device, such as an electronic cigarette, vaporizer or heat-not-burn device.

### BACKGROUND

The popularity and use of reduced-risk or modified-risk devices (also known as vaporisers) has grown rapidly in the past few years as an aid to assist habitual smokers wishing to quit smoking traditional tobacco products such as cigarettes, cigars, cigarillos, and rolling tobacco. Various devices and systems are available that heat aerosolisable substances to release a vapour for inhalation, rather than relying on burning of tobacco.

A commonly available reduced-risk or modified-risk device is the heated substrate aerosol generation device or heat-not-burn device. Devices of this type generate an aerosol or vapour by heating an aerosol substrate that typically comprises moist leaf tobacco or other suitable aerosolisable material to a temperature typically in the range 150°C to 300°C. Heating an aerosol substrate, but not combusting or burning it, releases an aerosol that comprises the components sought by the user but not the toxic and carcinogenic by-products of combustion and burning. Furthermore, the aerosol produced by heating the tobacco or other aersolisable material does not typically comprise the burnt or bitter taste resulting from combustion and burning that can be unpleasant for the user and so the substrate does not therefore require the sugars and other additives that are typically added to such materials to make the smoke and/or vapour more palatable for the user.

Known aerosol generating devices typically include a heating chamber for receiving a consumable aerosol generating substrate, a power source and control circuitry for controlling the supply of power to the heating chamber from the power source.

Different types of aerosol generating devices have been discussed in the state of the art. For example, PCT publication WO 2007/012007 discloses a method and system for the vaporization of a substance, the substance being a tobacco cartridge.

Another example is illustrated in PCT publication WO 2017/191176. This publication discloses a cartridge for use with an aerosol generating system which includes a reservoir for storing an aerosol-forming liquid and an induction heatable element. The cartridge employs a capillary element to convey the aerosol-forming liquid from the reservoir to the induction heatable element and the induction heatable element is arranged to heat the conveyed aerosol-forming liquid to vaporize it. In embodiments of this system, it uses aerosol-forming liquids or non-liquid flavor-release medium.

On a general level, aerosol generating devices can use one of a number of different approaches to provide heat to a substance to produce a vapour or aerosol. One such approach is a aerosol generating device which provides heat to a removable body, a so called "stick", containing tobacco material. In such a device, proximity of the heat source to the body, i.e. tobacco stick, is usually desirable in order to maximize heat energy transferred from the heat source of the device to the aerosol-generating material. Ideally, the removable body is in contact with the heat source to maximize efficiency of heat transfer. Examples of such products is commercialized under the tradenames Ploom TECH^{™} and Ploom+^{™}, the Ploom TECH^{™} products using a low temperature heating process while the Ploom+^{™} products use a high temperature heating process.

Generally, the device comprises a body, an oven with a heating chamber for a tobacco stick, electronic means such as a PCB for operating the device and an energy source, such as a battery (rechargeable or not).

One of the problems a user is confronted with in the use of such devices is the proper indication of the pre-heating (or heating-up) status of the device, so that the user is correctly informed when the device is ready for use, i.e. for vaping. The requirements of the heating-up process may depend on several factors, for example: time, battery level, effective temperature of the device (whether it has just been used for vaping or whether it has been unused for a certain period of time and is now cold), the temperature of the environment (for example the external ambient temperature), and the specific choice of aerosol generating product used in the device for vaping. This significant number of factors, and the fact these parameters may chance between uses, renders it difficult to determine the appropriate heating parameters (for example heating duration, temperature or sequence of temperatures ) to ensure the aerosol generating product has been heated to the correct temperature and the device is ready for use. In some cases, the aerosol generating device may incorrectly signal to the user that the device is ready for use, resulting in under or over heating of the aerosol-generating consumable and a poor user experience. It is also of importance that the device is initialized for use as quickly and efficiently as possible to improve the user's experience.

In light of the above-discussed deficiencies of the state of the art, the present invention seeks to address at least one of the above problems among other aims, in particular to take into account the various parameters that influence the heat-up procedure and effectively indicate when the device is ready for use.

### SUMMARY

According to a first aspect of the invention there is provided an aerosol generating device comprising: a heating chamber arranged to hold an aerosol generating medium; a heater arranged, in use, to heat the heating chamber; a temperature measuring means arranged to measure the temperature of the heater or heating chamber; at least one configured to indicate when the measured temperature has reached a use temperature and/or when an initialisation heating time has elapsed; a memory storing one or more rules, each rule defining an operating process of the heater and the indicator; control circuitry configured to select a rule stored in the memory and operate the heater and indicator according to the selected rule, such that the indicator is operated to indicate when the measured temperature has reached a use temperature and/or when an initialisation heating time has elapsed, thereby signalling when the aerosol generating device is ready for use.

Since the aerosol generating device stores one or more rules for operating the heater and indicator, the aerosol generating device is able to adapt to the changing parameters affecting the heat-up procedure by selecting an appropriate rule to provide optimum heating of the aerosol generating medium for the current parameters. Furthermore since both the control of the heater and indicator is governed by the rule it can be ensured that the user is correctly notified when the device is ready for use to avoid over or under heating of the aerosol generating medium and the associated detrimental effects on the user experience. Therefore when the indicator is operated to signal that the aerosol generating device is ready for use it can be assured that the optimal user experience is provided. In some examples, the control circuitry may only enable the device for use when the appropriate conditions are met for example when the measured temperature has reached a use temperature or the initialisation heating time has elapsed.

The aerosol generating medium may be in the form of a consumable which is heated to release an aerosol. Preferably the heating chamber is arranged to receive a tobacco rod (or tobacco stick).

"Ready for use" means that the aerosol generating medium has reached a required temperature for a required duration to effectively generate the aerosol. In other words, that the aerosol generating medium has reached a use temperature.

Preferably operating the indicator to indicate when the measured temperature has reached a use temperature and/or when an initialisation heating time has elapsed, thereby signalling when the aerosol generating device is ready for use further comprises operating the indicator to provide a unique signal associated with the device being ready for use. For example, the indicator may be operated one or more times during a heat up period before the measured temperature has reached a use temperature and/or before an initialisation heating time has elapsed but then is operated to provide a different signal to signal that the device is ready for use. For example a light emitting indicator may be increasingly illuminated during a heat up period but fully illuminated when the measured temperature has reached a use temperature and/or the initialisation heating time has elapsed to signal the device is ready for use.

Preferably the memory stores a first rule and the control circuitry is configured to operate the heater and indicator according to the first rule, the first rule comprising: operating the heater to heat the heating chamber to a use temperature during a heat-up period and then maintaining the heating chamber at the use temperature; and operating the indicator to signal that the device is ready for use when an initialisation heating time has elapsed, where the initialisation heating time is longer than the heat-up period. In this way, the indication that the device is ready for use is not linked to the temperature of the heater but to an initialisation heating time, i.e. a particular heating duration. With certain aerosol generating mediums, for example tobacco based consumables, and in some environments, for example with a low ambient temperature, there is a delay after the heater has reached the use temperature before the aerosol generating medium effectively releases an aerosol. By configuring the device in this way, the aerosol generating medium is held at a use temperature for a predetermined time to ensure it is ready for use. The initialisation time may be chosen based on one or more of a measured initial heating temperature, the ambient temperature, the particular aerosol generating medium being heated or user selection.

The heat up period is the time from an initial heater start time until the measure temperature reaches the use temperature. Maintaining the use temperature means maintaining the use temperature for a session duration, i.e. sufficient for the user to use the device and substantially deplete the aerosol generating medium. The session duration may be between 2 and 10 minutes for example, more preferably between 3 and 6 minutes.

The initialisation time may be a heating duration from an initial heater start time until the indicator is operated to signal the device is ready for use. The initialisation time is preferably longer than the heat-up period by 5 to 60 seconds, preferably 15 to 45 seconds, most preferably around 30 seconds. Preferably the heating chamber in these examples is arranged to receive a consumable comprising tobacco material such as a tobacco rod. It has been determined that the heating of such consumables is particularly dependent on environmental factors such as ambient temperature.

Preferably the first rule comprises: operating the indicator when the use temperature has been maintained for a heating period of 10 to 60 seconds to signal the device is ready for use. In this case, the initialisation heating time is the heating period plus an additional heating time of 10 to 60 seconds, preferably 20 to 40 seconds. The additional heating time may be selected based on one or more of: a user input; an initial temperature measured by the temperature measuring means; a property of the heater; a measured ambient temperature; a remaining energy level of a battery of the aerosol generating device.

Preferably the memory additionally stores a second rule and the control circuitry is further configured to operate the heater and indicator according to the second rule, the second rule comprising: operating the heater to heat the heating chamber to a use temperature during a heat-up period and then maintaining the heating chamber at the use temperature; and operating the indicator when the use temperature is first reached to signal the device is ready for use. In this way, the control circuitry may select between a first process in which the indicator is operated to signal the device is ready for use upon the measured temperature reaching the use temperature and a second in process in which the indicator is operated after an initialisation time has elapsed. This allows a user to select between a process which indicates the device is ready as soon as possible and a process in which further heating is carried out to provide an optimal experience at the expense of a longer waiting time. Furthermore, the process may be selected based on ambient conditions to ensure the device is ready for use. Maintaining the use temperature means maintaining the use temperature for a session duration, e.g. sufficient for the user to use the device and deplete the consumable.

Preferably the device further comprises a user input operable to instruct the control circuitry to select the first rule or the second rule. The user input may be a switch or button. Preferably holding the button for a first duration selects the first rule and holding the button for a second duration selects the second rule, where the first and second durations are different. An indicator, such as a vibrator, may be used to signal to the user which rule has been selected. In this way, the user can select a heat-up mode based, for example, on the current ambient conditions such as the local temperature to choose the first rule when in a colder climate for example.

Preferably one or more rules define an operating process of the indicator in which the indicator is operated: when the heating temperature reaches one or more intermediate temperatures, where the one or more intermediate temperatures are between an initial temperature and the use temperature; and/or when one or more intermediate heating times have elapsed, where the one or more intermediate heating times are between a heater start time and the initialisation heating time. Preferably the indicator is configured to produce a different signal when the measured temperature reaches the use temperature than when the measured temperature reaches the one or more intermediate temperatures. Preferably the indicator is configured to produce a different signal when the initialisation time has elapsed than when the one or more intermediate heating times have elapsed. In this way, the progress of the device during the heat-up process can be signalled to the user. The intermediate temperatures may equally be referred to as a "threshold temperature" herein. The intermediate heating durations may equally be referred to as time intervals.

Preferably the control circuitry is configured to select a rule according to one or more of:
a user input; an initial temperature measured by the temperature measuring means; a property of the heater; a measured ambient temperature; a remaining energy level of a battery of the aerosol generating device. In certain embodiments the control circuitry is configured to select a rule based on both a user input and an initial temperature measured by the heater. For example, the control circuitry may be configured to select the first rule or the second rule based on a user input and then select a sub rule defining the operation of the heater based on the measured initial temperature of the heater. In this way, the user can choose which heat up mode to use and the device automatically calibrates the heating of the heating chamber based on the measured initial temperature (which might vary for example depending on when the device was last used).

Preferably one or more rules comprise a heating curve defining a change in heating temperature over time; wherein the control circuitry is configured to select a heating curve and operate the heater to heat the heating chamber according to the selected heating curve. The heating curves may define a target temperature profile, i.e. a target temperature change over time. The control circuitry is preferably configured to periodically receive a measurement from the temperature measuring means in order to control the operation of the heater to follow the selected heating curve. The one or more rules may be selected based on a measured initial temperature for example the heating curve profile may be a function of a measured initial temperature received from the temperature measuring means. The one or more rules may additionally comprises operating the indicator to provide a changing signal as the measured heating temperature follows the heating curve. For example a visual indictor may be progressively lit as the heating temperature follows the heating curve. The rule may comprise operating the indicator as defined in the first rule or the second rule.

Preferably one or more rules comprise a table containing a plurality of intermediate temperatures and the use temperature, the control circuitry is configured to operate the heater to heat the heating chamber to each intermediate temperature and the use temperature. The control circuitry may operate heater to heat the heating chamber to each of the intermediate temperatures and the use temperature in sequence. The rule may comprise operating the indicator to signal when each of the intermediate temperatures is reached. For example, the indicator may be a visual indicator and the control circuitry is configured to progressively light the indicator when each of the intermediate temperatures is reached. The rule may comprise operating the indicator as defined in the first rule or the second rule.

Preferably the one or more intermediate temperatures are determined by the control circuitry according to an initial temperature measured by the temperature measuring means. In particular, each intermediate temperature may be stored as a function of the measured initial temperature. In this way, the intermediate temperatures may be selected to adapt to differing ambient temperatures or starting temperatures of the heater.

Preferably the aerosol generating device further comprises a battery, wherein the control circuitry is configured to measure the power supplied by the battery; wherein one or more rules comprise a plurality of heat-up rates each corresponding to a power level supplied by the battery, and the control circuitry is configured to select a heat-up rate based on a measurement of the power supplied by the battery. The plurality of heat-up rates may be stored as a function of both the measured power level supplied by the battery and a measured initial temperature. The rule may comprise operating the indicator as defined in the first rule or the second rule.

Preferably the control circuitry is configured to select a rule according to an initial temperature measured by the temperature measuring means. In particular, the operation of the heater may be controlled according to an initial temperature. In this way, the heat-up process can be tailored to the environmental temperature and based on when the device was last used (and therefore the resultant temperature remaining in the heating chamber).

Preferably the indicator comprises one or more of: a visual indicator; a haptic indicator; an acoustic indicator. For example, the indicator may be one or more: of a vibrator, an optical display, a light emitting display, an array of light emitting diodes.

Preferably the indicator comprises a visual indicator, wherein said visual indicator comprises a light emitting indicator that changes colour and/or is progressively lit during heating-up.

Preferably the light emitting indicator changes colour and/or is progressively lit: when the heating temperature reaches one or more intermediate temperatures, where the one or more intermediate temperatures are between an initial temperature and the use temperature; and/or when one or more intermediate heating times have elapsed, where the one or more intermediate heating times are between a heater start time and the initialisation heating time.

Preferably the light emitting indicator changes colour and/or is progressively lit: when one or more intermediate heating times have elapsed, where the one or more intermediate heating times are between a heater start time and the initialisation heating time. Preferably the light emitting indicator comprises a plurality of LEDs and the plurality of LEDs are illuminated in sequence as a plurality of intermediate heating times have elapsed. Preferably the plurality of heating times span a time period of more than 15 seconds. These aspects of the inventions are particularly advantageous when the aerosol generating device is a heat not burn device for example wherein the heater is arranged to heat the heating chamber to a temperature suitable to release a vapour without burning the aerosol generating medium. Preferably the heater is configured to provide controlled heating of the heating chamber wherein the heating chamber is heated to a sustained use temperature over an initialisation period. In such examples it is particularly important to provide feedback to the user on the progress of the initialisation heating time as this can be a sustained period of time, for example upwards of 20, 30 or 50 seconds.

The control circuitry is preferably configured to operate the light emitting indicator to emit light of a particular colour when the use temperature is reached and/or when the initialisation heating time has elapsed, and operate the light emitting indicator to emit light of a different colour to the particular colour when the one or more intermediate temperatures are reached and/or when the one or more intermediate heating times have elapsed. For example the light emitting indictor may be operated to progressive change colour when the one or more intermediate temperatures are reached and/or when the one or more intermediate heating times have elapsed and emit the particular colour light when the device is ready for use.

The control circuitry is preferably configured to operate the light emitting indicator to fully light the light emitting indicator when the use temperature is reached and/or when the initialisation heating time has elapsed, and progressively partially light the light emitting indicator when the one or more intermediate temperatures are reached and/or when the one or more intermediate heating times have elapsed. For example, the light emitting indicator may be controlled to progressively light an area of the light emitting indicator as the one or more intermediate temperatures are reached and/or when the one or more intermediate heating times have elapsed and fully light the area of the light emitting indicator to signal the device is ready for use.

In another aspect of the invention there is provided a control circuit for an aerosol generating device as defined in the appended claims, the control circuit configured to receive a temperature measurement of the heater or heating chamber from a temperature measuring means; select a rule from a memory storing one or more rules defining an operating process of a heater and an indicator; and operate the heater and indicator according to the selected rule, such that the indicator is operated to indicate when the measured temperature has reached a use temperature and/or when an initialisation heating time has elapsed, thereby signalling when the aerosol generating device is ready for use.

According to a further aspect of the present invention, a vapor generating device is provided, preferably including a heating chamber arranged to hold tobacco stick, a heater configured to provide heating to the heating chamber, and a visual indicator for indicating at least when a heating-up of the chamber has reached a use temperature. Of course, the indicator is not limited to the mentioned function and may be used for other aims (for example charging of the device, malfunction of the device, vaping progress, energy level of the device, cleaning needs etc.), as will be described in the present application. In addition, other means may be present, such as a button to turn the device on or off, to start the heating-up process, haptic capabilities (such as vibrations) or sounds to inform the user of a status of the device, connection means (such as USB etc.) and communication means (such as an antenna). All these aspects will be described in more detail in the present application.

In embodiments, the present invention concerns an aerosol generating device comprising a heating chamber arranged to hold an aerosol generating medium, a heater arranged in use to provide heating to the heating chamber, temperature measuring means to measure the temperature of the heater, at least an indicator for indicating at least when the heating-up of the heater has reached a use temperature. The device further comprises memory means containing rules to operate the heater, and operating means to select at least a rule and operating the heater according to said selected rule, the operating means further determining from the selected rule an operation of the indicator such that at least the indicator which is intended to signal that the use temperature has been reached is operated when said use temperature is reached.

In embodiments, the rules comprise curves indicating temperature profile of the heater, the operating means being configured to select one curve based on a property of the heater and determine the operation of the indicator according to the selected curve.

In embodiments, the rules comprise tables containing a plurality of threshold temperatures and the use temperature, the operating means is configured to select at least one threshold temperatures based on a property of the heater and determine the operation of the indicator according to the selected threshold temperatures.

In embodiments, the rules comprise tables containing a plurality of time intervals, the operating means is configured to select one time interval based on a property of the heater and determine the operation of the indicator according to the selected time interval.

In embodiments, the property of the heater is a starting temperature measured by the temperature measuring means at a beginning of a vaping session.

In embodiments, the rules take into account a temperature of the device as a parameter and wherein said temperature of the device comprise the temperature of the heating means.

In embodiments, the rules take into account the preferences of the user and/or the energy level of the device.

In embodiments, the rules comprise a plurality of heat-up rates each corresponding to a power level supplied to the heating means, the operating means is configured to select a heating-up rate based on a measurement of the power output from a battery of the aerosol generating device and determine the operation of the indicator according to the selected heat-up rate.

In embodiments, the indicator comprises at least visual indicator and/or a haptic indicator and/or an acoustic indicator.

In embodiments, the visual means comprise a light indicator that changes colour and/or is progressively lit during heating-up.

In embodiments, the invention concerns a control circuit for an aerosol generating device as defined herein, wherein said control circuit operates at least an indicator in accordance with at least rule selected among a set of rules, wherein the circuit takes at least a parameter into account, looks up and selects at least a rule and operates the device in accordance with the selected rule.

In embodiments, the parameter(s) comprise(s) the initial temperature of the device, preferably of the heating means.

In embodiments, the parameter(s) comprise(s) the energy level of the device, or personalized parameters of a user.

The aerosol generating devices of the various aspects disclosed above may of course use any combination of features of any of the other aspects as set out above and apply these features to one or more of the corresponding components, to provide similar advantages.

### BRIEF DESCRIPTION OF THE DRAWINGS

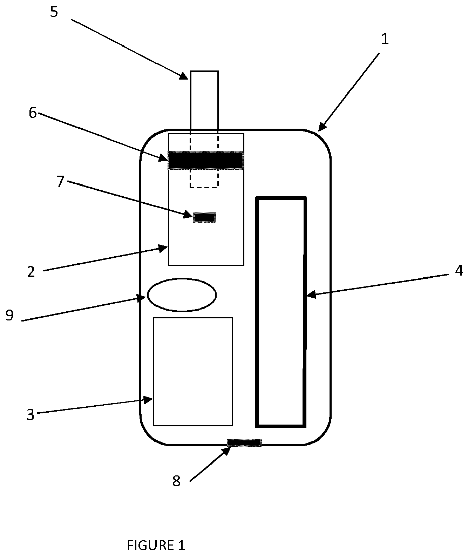

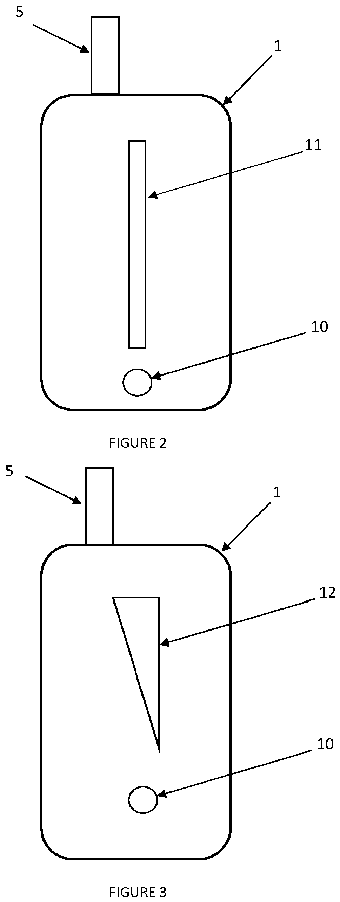

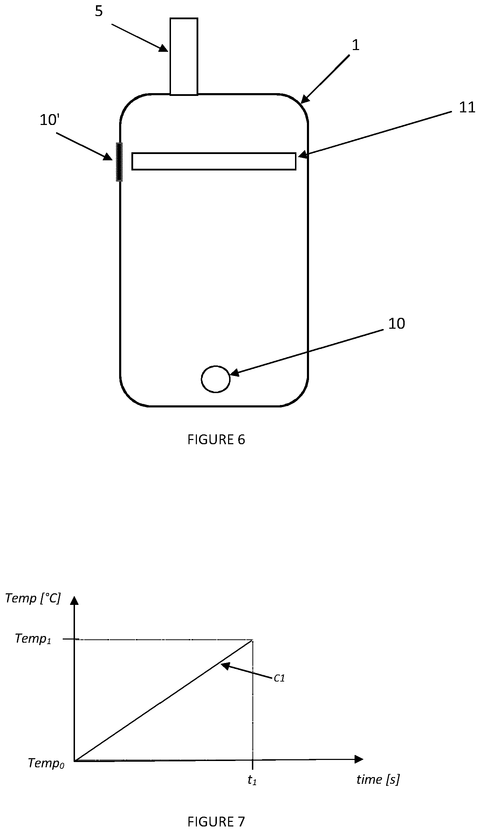

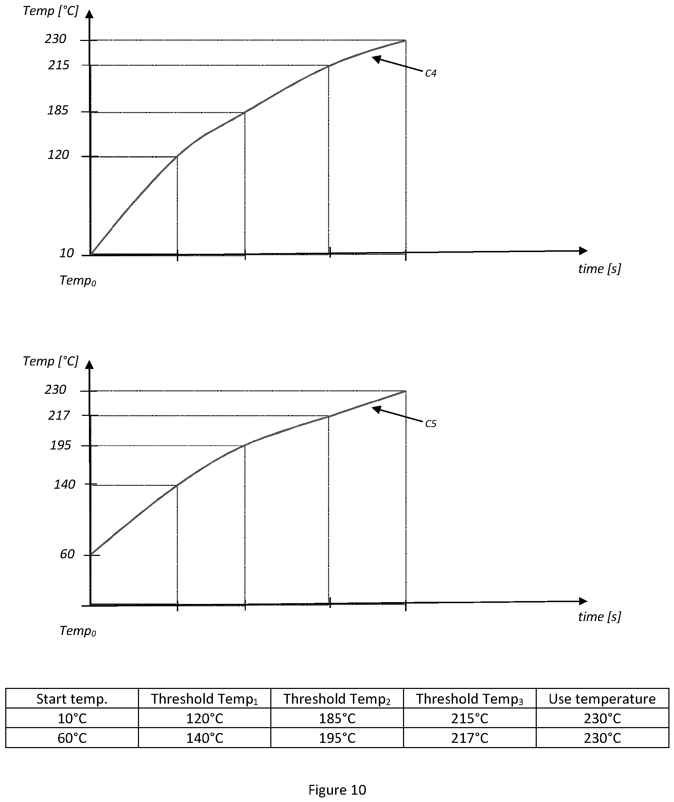

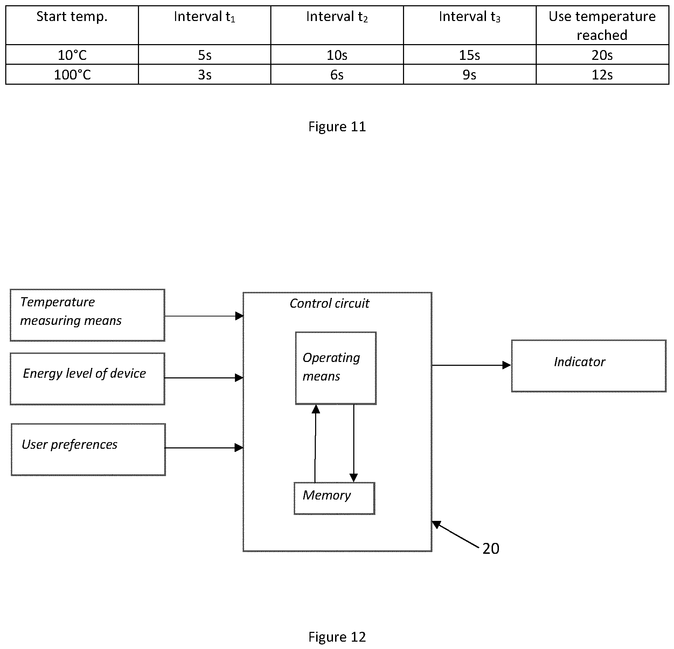

(0001) Embodiments of aerosol generating devices and heating assembly will now be described by way of several examples with reference to the accompanying drawings, in which:
(0002) FIG. 1 shows a diagrammatic cross-sectional view of an aerosol generating device according to one aspect of the present invention;
(0003) FIGS. 2-6 illustrate embodiments of indicators according to the present invention;
(0004) FIGS. 7-9 illustrate embodiments of curves according to embodiments of the present invention;
(0005) FIGS. 10-11 illustrate examples of heating tables according to embodiments of the present invention;
(0006) FIG. 12 illustrates schematically an embodiment of a control circuit.

(0007) Herein, identical reference numerals are used, where possible, to designate identical elements that are common to the figures. Also, the figures are simplified for illustration purposes showing features of the invention and may not be depicted to scale.

### DETAILED DESCRIPTION OF SEVERAL EMBODIMENTS

Figure 1 schematically illustrates an aerosol generating device according to the present invention. The device comprises a heating chamber 2 arranged to hold an aerosol generating medium 5; a heater 6 arranged, in use, to heat the heating chamber 2; a temperature measuring means (for example a temperature sensor such as a thermistor) 7 arranged to measure the temperature of the heater or heating chamber; at least one indicator 11-14 configured to indicate when the measured temperature has reached a use temperature and/or when an initialisation heating time has elapsed; a memory 3 storing one or more rules, each rule defining an operating process of the heater and the indicator; control circuitry configured to select a rule stored in the memory 3 and operate the heater 6 and indicator 11-14 according to the selected rule, such that the indicator 11-14 is operated to indicate when the measured temperature has reached a use temperature and/or when an initialisation heating time has elapsed, thereby signalling when the aerosol generating device is ready for use.

In particular, since the control circuitry can select a rule within the memory to control both the heater and the indicator it allows the device to ensure that (1) appropriate heater parameters are selected, for example based on the particular consumable, last use of the device and environmental factors like temperature and (2) the indicator is operated to signal to the user when the device is ready for use to ensure that optimum conditions are provided at the start of use. Together this solves the problem that the point at which optimum aerosol generation is provided changes based on a number of parameters such as ambient temperature, time since last use and the particular consumable. The device according to the present invention is thus able to control the heater temperature and signal to the user when the device is ready for use, taking into account these parameters. This allows the device to be used with uniform performance across countries with different climates and with different consumables for example.

The device is considered ready for use when the aerosol generating medium has reached the correct temperature for sufficient time to generate sufficient vapour to provide a good user experience. In particular, the consumable should be sufficiently heated such that water within the consumable is evaporated and is producing predominantly vapour. Before this much of the vapour produced is water vapour and therefore does not provide a good user experience. Because the temperature within the consumable is not measured directly, when the device is ready for use can be inferred from one or both of (1) a measurement of the heating chamber (or heater) and (2) a heating duration. By understanding the values of these parameters (1) and (2) to provide efficient aerosol generation for a particular consumable in particular conditions, it can be reliably determined when the device is ready for use. These parameters can be codified in terms of rules which are stored in the memory of the device and selected by a user or automatically based on sensed parameters to control the heater and indicator to signal to the user when the device is ready for use.

Referring initially to FIG. 1 which schematically the aerosol generating device 1 according to the present invention. The aerosol generating device comprises a heating chamber 2 with heating means (i.e. a heater) 6 and a temperature measuring means 7, preferably for measuring the temperature of the heating means 6 and/or the heating chamber 2. The device 1 further comprises control circuitry include a PCB 3 for the electronic management of the device and its parts and a source of energy 4 (for example a battery, preferably rechargeable). The heating chamber 2 is configured to receive and hold an aerosol generating medium in the form of a consumable such as a tobacco stick 5 that may be exchanged once depleted. For example, the consumable may be introduced into the heating chamber 2 by manual insertion in the chamber 2. The aerosol generating device in this example further includes connection capabilities 8 (for example an USB connector such as USB-B or USB-C), that may be used for charging the energy source 4 and/or for downloading/uploading information to the PCB 3 such as heating parameters and other data and programs/instructions.

The device 1 may also use wireless technology to download/upload information by way of wireless communication means (such as an antenna 9, schematically illustrated in Figure 1). The heating means 6 may use induction as an example of possible technology in one example. Preferably the heating means 6 is a thin film heater arranged to heat the heating chamber. For example the heating chamber may be a tubular heating chamber arranged to receive the consumable and the thin film heater may be circumferentially wrapped around an outer surface of the heating chamber.

All elements are interconnected, for example via the PCB and with wires, in order to ensure the functioning of the device. This generic construction and its features are applicable to the embodiments described in the present application even if any of these elements is not specifically identified/illustrated in each embodiment.

There is a growing demand for devices which allow users to promptly replace depleted aerosol-generating material (for example a stick 5 of tobacco) so as to ensure freshness and the production of high quality vapor/aerosol. However, it can often be difficult for consumers to define when their current aerosol-generating material is depleted and must be changed. One solution is to implement a puff counter, which helps to inform the user of the extent to which the aerosol-generating material has been used. However, such puff counters often do not have the capability to detect the insertion of a new body of aerosol generating material so that the counting operation may not be accurate.

In some example, with the heating assembly, when a user of the device wishes to remove the aerosol generating medium in use, he can simply actuate an ejector to eject the aerosol generating medium from the heating chamber of the device or remove it via a manual operation. This allows for quick and easy removal of the aerosol generating medium without the user having to engage excessively with the device. The use of an ejector further avoids the risk of the user having to come in to proximity with any heated elements. This allows the aerosol generating medium to be placed in close proximity to or in contact with the heating chamber surface whilst mitigating some of the problems identified above.

The aerosol generating medium may be provided in one or more of a number of different forms. The aerosol generating medium may be a capsule which comprises an aerosol generating substance inside an air permeable material. Any material enclosing the aerosol generating substance may have a high air permeability to allow air to flow through the material with a resistance to high temperatures. Examples of suitable air permeable materials include cellulose fibers, paper, cotton and silk. The air permeable material may also act as a filter.

Alternatively, the aerosol generating medium may be an aerosol generating substance wrapped in paper, most preferably a tobacco rod, wrapped in paper.

Alternatively, the medium may be an aerosol generating material held inside a material that is not air permeable, but which comprises appropriate perforation or opening to allow air flow. Alternatively, the medium may be a body of the aerosol generating substance itself. Preferably, the body is a mousse or a foam of the aerosol generating substance. Alternatively, the medium may be formed substantially in the shape of a stick which may have a mouthpiece filter. In such a case, the medium may be a sheet such as a paper wrapped aerosol generating material. The examples and embodiments as described in the present application use such a stick, see reference 5 in the figures. Preferably, the aerosol generating medium may be a body comprising an aerosol generating substance. The aerosol generating substance may be any suitable substance capable of forming an aerosol. Preferably the aerosol generating substance is capable of forming an aerosol when heated. The substance may be a solid or semi-solid substance. Typically, the substance may comprise plant derived material, and in particular, the substance may comprise tobacco. Example types of aerosol generating solids include powder, granules, pellets, strands, porous material, foam or sheets. Alternatively, the aerosol generating medium may comprise a cartridge or a capsule containing solid, semi-solid or liquid substance.

Preferably, the aerosol generating substance may comprise an aerosol-former. Examples of aerosol-formers include polyhydric alcohols and mixtures thereof such as glycerine or propylene glycol. When comprising an aerosol-former, typically the aerosol generating substance may comprise an aerosol-former content of between approximately 5% and approximately 50% on a dry weight basis. Preferably, the aerosol generating substance may comprise an aerosol-former content of approximately 15% on a dry weight basis.

Typically, the body comprises humectant or tobacco containing moisture. Preferably, the body comprises one or more of humectant, tobacco, glycerine and propylene glycol. Typically, the body may comprise a percentage of vaporisable or aerosolisable liquid (preferably of humectant such as propylene glycol and/or glycerine, but possibly additionally including other aerosolisable liquids such as water or ethanol, etc.) which is greater than 20 wt%. In this context, 100 wt% is equal to the total weight of the liquid and the vaporisable or aerosolisable substance, such as tobacco, humectant and/or plant derived material.

Examples of aerosol generating medium are given in the prior art cited above and they are envisaged within the frame of the present invention, as non-limiting possibilities.

According to an aspect, the present invention is directed to the determination of the heating time and or/ profile of the product/medium and to the communication of an information to the user that the system is ready to use. Indeed, it is necessary to reach a proper temperature which depends among others on the aerosol generating medium for an optimal use of the device and to inform the user of the heating status so that he or she can start using the device when appropriate or be warned when the device is not ready to use (or even unable to be used). The status of the device (unused for a certain time or just used) may also have an influence on the heating process and therefore should be taken in consideration when carrying out a heating operation or step.

In embodiments, the device 1 uses an indicator 11, 12, 13, 14 (see figures 2 - 6 illustrating different examples) to inform the user of the status of the device. For example, the indicator 11, 12, 13, 14 may be operated to indicate the temperature, such as the temperature of the heating chamber 2 or of the heater 6, i.e. the current temperature measured by temperature measuring means 7. In other examples, the indicator may be used to indicate a heating time that has elapsed since the heater was activated. Alternatively both the measured temperature of the heating chamber and the heating duration may be used to determine when consumable is heated sufficiently to be ready for use.

The indicator may be visual (for example a light, a LED etc. or a plurality thereof, a screen), acoustic (such a sound, a buzz etc.) or tactile/haptic (such as a vibration for example) or a combination thereof. With the indicators described herein, it is possible to disclose many information, such as status of heating-up (or pre-heating), remining time of heating-up until ready to use (vape), indication of the heating-up rate and other device related information (such as energy level, cleaning need etc.). Of course, these means may be used alone or in combination and the user may configure this aspect to personalize the product to his/her taste. In addition, the system also comprises a button 10 for example for its activation or for the activation of different functions of the device as described herein.

For example, in an embodiment, the indicator 11 is a visual display for showing the readiness of the vapor generating device or system 1 to a user, for example to indicate that the operation heating temperature has been reached to allow for vaporization of the aerosol generating material, is in the form of a linearly extending display 11, for example but not limited to a line of a plurality of illumination devices such as LEDs, a longitudinal display screen, a light bar, see the designs illustrated in figures 2 to 6. This visual display 11 can be arranged to be in parallel with an axis of longitudinal extension of the vapor generating device or system 1. In a variant, it can also be arranged to fully or partially encircle or surround the device 10, see figure 6. In this figure, the indicator 11 may be replaced by any other indicator 12, 13 or an indicator with another shape. This allows to give a progressive visual feed-back to the user, to directly see the status of the heating. For example, after the user turns the vapor generating device or system 1 on, for example on pressing on the button 10, the visual display is controlled such that progressively, more elements, pixels or surface are lit to finally reach a fully lit linear visual display that may indicate readiness of the vapor generating device 1 for inhalation of the vaporized substance by the user, after a time period for full display TPD.

The reaching of the full lit linear display with the time period for full display TPD can be exactly timed to the moment when the vapor generating device or system 1 and its heating elements are ready for vaporization, i.e. to be matching the time period for heat-up TPH or can be time chosen after the vapor generating device or system 1 is actually ready, such that TPD > TPH. This can be verified by a temperature sensor or can be done by a fixed or variable time period for TPD for increasing the displayed surface of visual display such that it can be guaranteed that the heating elements 2 are ready.

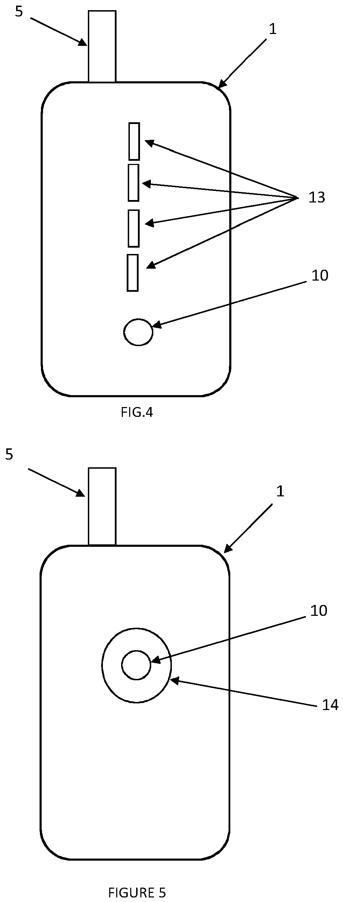

Also, if several lights are used, they may be of the same colour or not. They may change color or not. For example, as long as the system is not ready for use, they may transmit a red light, and once the system is ready, then the light becomes green. Other colors may be used as well, the aim being to provide an information that is easy to understand. The light may be formed as a bar 11, 12 or comprises several individual elements 13 (for example four as in figure 4). A screen may also be used.

In embodiments, the device comprises at least an indicator (such as LEDs) that progressively lights up during a certain time interval (for example up to 20 seconds) and optionally, a vibration may be felt when the heating-up is over and the device is ready to use (for example to vape). The indicator may change colour (for example from red to green) or a plurality of lights that are lit one after the other over time. For example, in figure 2, the system 1 comprises a light bar 11 that can be progressively lit to indicate the heating status with a same color or a different color. For example, the light may start at the bottom of the bar (close to the button 10) and then progressively fill the bar 11 as the heating-up process takes place. Once the bar 11 is entirely lit, this is the indication that the heating-up process is finished, and the device may be used. The color of the bar may be the same or it may change over time, for example it is red to start with (at the beginning of the heating process) and then it turns to green once entirely lit, meaning the device is ready to use. Figure 3 illustrates another variant where the indicator 12 has a different shape. Its functioning may be the same than the bar 11 in figure 2 with progressive lightening and/or change of color. However, such embodiments may be inaccurate if they do not consider the initial temperature of the heating means 6 because the device may be ready to use before the indicator indicates the ready to use status because the time interval is fixed. In such a case, the user may wait more than necessary, or the device may provide conflicting information to the user. In embodiments of the indicator, for example as illustrated in figure 4, the device 1 may comprise a row of a determined number (i.e. four) of aligned light indicators 13 (for example LEDs), for example forming a display, the first in line of the determined number of LEDs being intended to light up at a start of a heating-up step and the last in line of the determined number of LEDs being intended to light up when the heating-up has reached a use (i.e.vaping) temperature, for example of the heating chamber.

In this embodiment, as in variants, one may use a light indicator that changes its colour (for example instead of using several lights, i.e. LEDs) and it may be combined with an acoustic or physical/haptic signal once the desired temperature has been reached. If several lights are used, they may be of the same color or not. They also may change colour or not. For example, as long as the device is not ready for use, they may transmit a red light, and once the device is ready, then the light is green. In variants, the indicators may have the same size or a different size (for example an increasing size), the same or different shapes as illustrated in the examples.

In embodiments, for example as illustrated in figure 5, the indicator 14 has a disc shape (rather than a rectangular shape as illustrated in other figures of the application). In the variant illustrated in figure 5, the button 10 is place inside the indicator 14 but this is only an example and the button may be placed as in figures 2-4 for example. In the variant of figure 5, the indicator 14 may comprises LED and be progressively lit depending on the heating-up status.

The button 10 may be placed as illustrated in the figures or somewhere else on the body 1, for example on a side of the body 1, see reference 10' in figure 6. In variants, the device 1 may comprise more than one button 10, for example two buttons 10, 10' placed at different locations on the body 1 as illustrated in figure 6. As will be readily understood by a skilled person, many embodiments and combinations are possible in the frame of the present invention.

Further, to overcome the problem mentioned above, it is desirable to better take into consideration the effective state of the device to improve its functioning as discussed above and provide an accurate information to the user, i.e. when the device is ready for use.

To this effect, the device stores in a memory (for example in the PCB 3) a set of rules that are used to operate the device. The set of rules may take different parameters into account to optimize the operation of the device. For example, it may consider the initial temperature of the device, preferably of the heating means 6, and/or the aerosol generating material 5, and/or some preferences of the user (quick heating or moderate heating) etc. Typically, the set of rules used in the frame of the present invention may be tables of correspondence between heat-up times/temperature, and/or heating curves as a function of the initial starting temperature, and/or fixed heating rates. According to the present invention, at the start of heating up step, the device will measure the starting temperature preferably of the heating means 6, and look up and select in the tables of correspondence or in the curves or rates which heat-up time and/or curve and/or rate applies as a function of the measured starting temperature and/or using other parameters as well as defined above. This will allow the device to work in a manner that provides accurate information to the user about the status of the device and the indicator(s) will be operated on the basis of the selected rule.

The system will then determine from the selected heat-up times and/or curves and/or rates, when or how the indicator(s) is (are) to be lit up or how the indicator(s) is (are) to be lit, such that the last of the indicator which is intended to signal the use temperature (for example vaping temperature) lights up at the same time as when the haptic signal is triggered (if this indicating means is desired by the user). This determination, monitoring and operation of the device is made preferably in the PCB 3 via an appropriate programming stored in the PCB 3, for example in a memory thereof.

In embodiments, the device may check the temperature on a time basis (for example every one second, or the time basis may vary over time) and then calculate on the fly what the heat up rate is and operate the indicator(s) accordingly (for example by lighting the LEDs one after the other). In this manner the device ensures that the LEDs to be all lit at the same time that the vibration is felt indicating that the device is ready to use (i.e. vape).

In embodiments, it may be set that each indicator or proportion of an indicator corresponds to a set temperature such that when the temperature has been reached and measured, the corresponding number of indicators are operated or part of the indicator. For example, if the measured temperature is half the desired temperature, then half of the indicators are operated or only half of a single indicator is operated. Other operations of the indicators may be chosen.

The rules may be adapted to the medium used (semi-solid, solid or a combination), to the heating means technology (such as induction, resistance heating etc.) and may also take external parameters into account, for example the air or ambient temperature or the temperature of the device.

In embodiments, some rules may be tailored to some desires of the user. For example, the user may want to use an accelerated heating process to win time, or alternatively the user may wish to use a slower heating process. In such cases, the user may define on the system his choice and the system will then use the appropriate rule.

In embodiments, the choice of the rules may be imposed by the system itself based on predetermined parameters, for example the energy level status of the system, or the stick 5 (tobacco) used. For example, in case of low energy, a dedicated heating rule may be chosen. In such case, if the energy level is high, then a quick heating-up (for example with a high heating rate) may be carried out. Alternatively, if the energy level is low, then a slow heating-up may be chosen (with a low heating rate). For example, some sticks 5 may need a higher temperature than others so the heating time may be longer or the heating curve steeper if the heating time is set to a fixed value. Alternatively, if the user wishes to keep a predetermined heating time, the heating curve may be steeper to reach the proper (higher) temperature in the set time. The user may also personalize the rules to match his/her desires and use such rules.

The rules mentioned above may be set in the system or they may be adaptable by the user and/or to the medium used. In variants, they may be downloadable and/or uploadable from/to a network (such as the internet) or from/to a dedicated application (for example on a device such as a smartphone or a computer/tablet). To this effect, the system comprises suitable connection means (wireless such as Bluetooth, via antenna 9, via NFC, or hardware such as USB connection 8), with appropriate hardware and/or software preferably in the PCB 3. For example, new rules may be made available when a new product is available or as updates. The new product may be an aerosol generating device or a stick 5, or aerosol generating substance, as examples.

Some consumables require sustained heating to reach a point at which they producing sufficient vapour for use to begin. The period of heating and type of consumable particularly affects the point at which vaping of acceptable characteristics can begin. For example, it has been determined that in colder countries, device which heat tobacco sticks to produce a vapour require significantly longer initialisation heating time to evaporate the water and to start producing the target vapour levels. In such cases the measured temperature does not provide a reliable indication of when the device is ready for use.

With this in mind, one example of the invention uses a rule in which the heater is operated to provide an initial heat-up phase in which the heater chamber temperature is gradually increased up to a use temperature and then maintained (i.e. maintained for the duration of the vaping session). The indicator is operated to provide a signal some time after the use temperature has been reached to indicate that vaping can commence. That is, the indicator is only operated to tell the user that vaping can start after an initialisation heating time. This initialisation time can be selected depending on factors such as the particular consumable, ambient temperature and last use of the device. For tobacco sticks it has been determined that increasing the temperature to a use temperature of 200-250 degrees C (preferably around 230 degrees C) and then maintaining the use temperature for 10 - 60 seconds (preferably around 30 seconds) ensures that the tobacco stick is producing sufficient vapour to optimise the user experience.

Because this initialisation heating time is needed more in colder climates, or with certain consumables, this example of the device may include an alternative mode in which the indicator is operated to signal the device is ready for use as soon as the heat-up period is complete, i.e. upon the measured temperature being equal to the use temperature or after a predefined heat-up period time (preferably 10 - 30 seconds, more preferably around 20 seconds) has elapsed. In this way, a user can select the required mode depending on the ambient conditions and consumable chosen.

The device may include a button which can be used to select the mode, for example the use can hold the button for a shorter duration to select one mode and for a longer duration to select the second mode, e.g. 1 second for indicate after heat-up period (mode 1) and 2 seconds for indicate after initialisation heating period (mode 2). In each case the indicator may be an LED display which is progressively illuminated to reach full illumination when the device is ready for use. Therefore for mode 1 the LED display may be progressively illuminated during the heat-up period to full illumination when the measured temperature reaches the use temperature and in mode 2 the LED display may be progressively illuminated during the initialisation heating period such that it is only fully lit some time after the use temperature is reached, for example around 20-40 seconds.

The rules stored in the memory may define various different control processes of the heater and indicator. These may be selected be user selection, or automatically based on sensed inputs (such as current measured temperature, sensed consumable type, ambient temperature) to ensure optimum functioning of the heater and correct indication of the device-ready state.

FIGs. 7-10 illustrate curves that may be followed in the frame of the present invention. Such curves may be stored (as part of the operation rules) in the memory within the PCB 3 of the device for example. In particular these heating curves may define a target heating temperature over time and the control circuit may be configured to select a heating curve and operate the heater such that the measured temperature tracks the target temperature, i.e. implementing a feedback loop. The heating temperatures in each of the curves may be stored as a function of one or more parameters, such as initial measured temperature, such that they may be adjusted based on the current conditions.

As a first example, figure 7 illustrates a first example of a heating curve C1. The initial temperature Temp₀ may be the environment temperature, the functioning temperature (i.e. "use temperature) Tempi may be approximately 230°C and the heating-up time t₁ may be 20s or less. These are of course examples and the temperature may be in a range, for example from 150°C to 350°C. Also the heating up time may be 20s or less as mentioned. These values may also depend on external parameters for example the product used to vape or the charge status of the device.

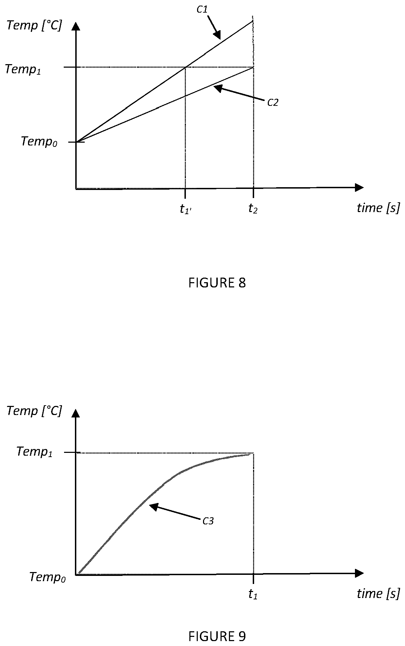

Figure 8 illustrates a second heating curve which starts from a second initial temperature Temp₀ which is higher than the initial temperature of figure 7. For example, this higher initial temperature may result from the fact that the device has been used recently and the heating means 6 are not at the environment temperature but at a higher one, as a consequence of the prior use of the device. In this case, if one follows the heating curve C1 (i.e. line) of figure 7, the use temperature is reached in a shorter time t_{1'} than the time t₁ of figure 7, as illustrated in figure 8. If the heating is not stopped after t_{1'}, then the system will reach a higher temperature at t₁ which has to be avoided. Alternatively, one may decide to follow another curve C2, which is flatter than C1, to reach the same temperature Tempi but in a longer time t₂.

Figure 9 illustrates another heating curve C3 which is not constant but has a steep beginning. This may be selected, for example, based on a particular consumable which is best heated by rapid initial heating before reducing the heating rate.

Figure 10 illustrates an example of a table with heating times in corresponding curves C4 and C5. For example, a device has 4 LEDs (for example the device of figure 4 with four indicators 13) to indicate the heating-up progress, the LEDs light up in sequence when the heater is detected to reach a temperature threshold in the lookup table of figure 11. The device may start from a relatively cold temperature, e.g. 10°Celsius, and it takes 20 seconds to heat up until ready to vape. The table may contain the temperature thresholds of 120, 185, 215, 230° Celsius. In this example, the 1st LED 13 lights up when the heater 6 reaches 120° Celsius , the 2nd LED 13 lights up when heater 6 reaches 185° Celsius, the third LED 13 lights up at 215° Celsius and all four LEDs 13 light up when the heater 6 reaches 230° Celsius. A vibration or a sound may be optionally provided to indicate as well that the use temperature has been reached. In the second example of this table, the device starts from a relatively higher temperature, e.g. 60° Celsius, when the oven is hot and not fully cooled down from a previous vaping session. In this case, the heat up time is shorter, e.g. 18 seconds to heat up until ready to vape. In this case, the table can contain 140, 195, 217, 230° Celsius as thresholds. Then, the 1st LED 13 light up when the heater 6 reaches 140° Celsius, 2nd LED 13 light up when the heater 6 reaches 195 Celsius, the third LED 13 lights up at 215° Celsius and all 4 LEDs 13 light up when the heater 6 reaches 230° Celsius. A vibration or a sound may be added as a haptic indicator as well. The order of the LED may be starting from the one closest to the button 10 in figure 4. Another order is of course possible also depending on the shape of the indicator. This example and the associated table/curves may be used on other devices, such as illustrated in figures 2, 3, 5 and 6 and the indicator managed in a suitable manner to indicate the threshold reached by the device. In this example, the rule created by the table is used to control the indicator and the device is adapted to reach the desired temperatures in the set times. The values indicated in figure 11 are of course examples and other values are possible and may be used in other tables (for example the initial temperatures, the time intervals and the temperature to be reached).

An embodiment using time control is illustrated in the table of figure 11. Here, as an example, on the first line, the start temperature is 10°C, and the indicator may be activated every 5 seconds until the use temperature is reached, typically after 20 seconds. The time intervals are thus 5s, 10, 15s and 20s. On the second line, another example is given when the initial temperature is 100°C. In this case, the heat-up time may be 12 seconds and the intervals are every 3 second of operating the indicator. Of course, these values are non-limiting illustrative examples and other values are within the scope of the present invention.

An embodiment of a control circuit 20 is given in figure 12. The circuit gets at least one parameter as input and based on said parameter is used to choose a rule among a set of rules to operate the device and in particular the indicators at the output, as is described in detail above.

Many other rules are possible depending on several parameters (heating temperature, time, system initial temperature etc.) that may be stored in the system and chosen from according to circumstances and/or from the user and the figures only gives non-limiting examples. Other parameters may be the energy level of the device (battery power) or aerosol generating substance.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

As described above, the indicators give the user an indication about the heating process and its status. The indicators may be progressively lit as the heating occurs and it may change color over time. In variants, the indicators may have one color at the beginning of the heating operation (for example red) and then change progressively to another color as the heating progresses (for example to green). The indicators may also flash or blink during the heating process and be constantly lit the end, when the device is ready to use. Many different possibilities exist to give a signal to the user. As mentioned above, the visual indication may be coupled to a tactile or haptic information, or even a sound.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein with respect to illustrative embodiments, the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Further exemplary embodiments of the present disclosure are set out in the following numbered clauses:
Clause 1. An aerosol generating device (1) comprising:
   a heating chamber (2) arranged to hold an aerosol generating medium (5);
   a heater (6) arranged, in use, to heat the heating chamber (2);
      a temperature measuring means (7) arranged to measure the temperature of the heater or heating chamber;
      at least one indicator (11-14) configured to indicate when the measured temperature has reached a use temperature and/or when an initialisation heating time has elapsed;
   a memory (3) storing one or more rules, each rule defining an operating process of the heater and the indicator;
   control circuitry configured to select a rule stored in the memory (3) and operate the heater (6) and indicator (11-14) according to the selected rule, such that
   the indicator (11-14) is operated to indicate when the measured temperature has reached a use temperature and/or when an initialisation heating time has elapsed, thereby signalling when the aerosol generating device is ready for use.
Clause 2. The aerosol generating device of clause 1 wherein the memory stores a first rule and the control circuitry is configured to operate the heater and indicator according to the first rule, the first rule comprising:
   operating the heater to heat the heating chamber to a use temperature during a heat-up period and then maintaining the heating chamber at the use temperature; and
   operating the indicator to signal that the device is ready for use when an initialisation heating time has elapsed, where the initialisation heating time is longer than the heat-up period.
Clause 3. The aerosol generating device of clause 2 wherein the first rule comprises:
   operating the indicator when the use temperature has been maintained for a heating period of 10 to 60 seconds to signal the device is ready for use.
Clause 4. The aerosol generating device according to clauses 2 or 3 wherein the memory additionally stores a second rule and the control circuitry is further configured to operate the heater and indicator according to the second rule, the second rule comprising:
   operating the heater to heat the heating chamber to a use temperature during a heat-up period and then maintaining the heating chamber at the use temperature; and
   operating the indicator when the use temperature is first reached to signal the device is ready for use.
Clause 5. The aerosol generating device of clause 4 further comprising a user input operable to instruct the control circuitry to select the first rule or the second rule.
Clause 6. The aerosol generating device of any preceding clause wherein one or more rules define an operating process of the indicator in which the indicator is operated:
   when the heating temperature reaches one or more intermediate temperatures, where the one or more intermediate temperatures are between an initial temperature and the use temperature; and/or
   when one or more intermediate heating times have elapsed, where the one or more intermediate heating times are between a heater start time and the initialisation heating time.
Clause 7. The aerosol generating device of any preceding clause wherein the control circuitry is configured to select a rule according to one or more of:
   a user input;
   an initial temperature measured by the temperature measuring means;
   a property of the heater;
   a measured ambient temperature;
   a remaining energy level of a battery of the aerosol generating device.
Clause 8. The aerosol generating device of any preceding clause wherein one or more rules comprise a heating curve defining a change in heating temperature over time; wherein the control circuitry is configured to select a heating curve and operate the heater to heat the heating chamber according to the selected heating curve.
Clause 9. The aerosol generating device according to any preceding clause wherein one or more rules comprise a table containing a plurality of intermediate temperatures and the use temperature, the control circuitry is configured to operate the heater to heat the heating chamber to each intermediate temperature and the use temperature.
Clause 10. The aerosol generating device of clause 9 wherein the one or more intermediate temperatures are determined by the control circuitry according to an initial temperature measured by the temperature measuring means.
Clause 11. The aerosol generating device of any preceding clause further comprising:
   a battery, wherein the control circuitry is configured to measure the power supplied by the battery; wherein
   one or more rules comprise a plurality of heat-up rates each corresponding to a power level supplied by the battery, and the control circuitry is configured to select a heat-up rate based on a measurement of the power supplied by the battery.
Clause 12. The aerosol generating device of any of clauses 8 to 11 wherein the control circuitry is configured to select a rule according to an initial temperature measured by the temperature measuring means.
Clause 13. The aerosol generating device of any preceding clause wherein the indicator comprises one or more of:
   a visual indicator;
   a haptic indicator;
   an acoustic indicator.
Clause 14. The aerosol generating device of clause 13 comprising a visual indicator, wherein said visual indicator comprises a light emitting indicator that changes colour and/or is progressively lit during heating-up.
Clause 15. The aerosol generating device of clause 14 wherein the light emitting indicator changes colour and/or is progressively lit:
   when the heating temperature reaches one or more intermediate temperatures, where the one or more intermediate temperatures are between an initial temperature and the use temperature.
Clause 16. The aerosol generating device of clause 14 or 15 wherein the light emitting indicator changes colour and/or is progressively lit:
   when one or more intermediate heating times have elapsed, where the one or more intermediate heating times are between a heater start time and the initialisation heating time.
Clause 17. The aerosol generating device of clause 16 wherein the light emitting indicator comprises a plurality of LEDs and the plurality of LEDs are illuminated in sequence as a plurality of intermediate heating times have elapsed.
Clause 18. The aerosol generating device of clause 17 wherein the plurality of heating times span a time period of more than 15 seconds.

## Claims

1. An aerosol generating device (1) comprising:
a heating chamber (2) arranged to hold an aerosol generating medium (5);
a heater (6) arranged, in use, to heat the heating chamber (2);
a visual indicator (11 -14) for indicating at least when a heating-up of the chamber has reached a use temperature;
wherein said visual indicator comprises a light emitting indicator that is progressively lit during heating-up.

2. The aerosol generating device of claim 1, wherein the heating chamber is arranged to hold a tobacco stick.

3. The aerosol generating device of any preceding claim, wherein the light emitting indicator is progressively lit:
when the heating temperature reaches one or more intermediate temperatures, where the one or more intermediate temperatures are between an initial temperature and the use temperature; and/or
when one or more intermediate heating times have elapsed, where the one or more intermediate heating times are between a heater start time and an initialisation heating time, the initialisation heating time comprising a predetermined time period from an initial heater start time.

4. The aerosol generating device of any preceding claim, comprising control circuitry configured to:
operate the light emitting indicator to fully light the light emitting indicator when the use temperature is reached and/or when an initialisation heating time has elapsed, the initialisation heating time comprising a predetermined time period from an initial heater start time; and
progressively partially light the light emitting indicator when the one or more intermediate temperatures are reached and/or when the one or more intermediate heating times have elapsed, where the one or more intermediate heating times are between a heater start time and the initialisation heating time.

5. The aerosol generating device of claim 3 or claim 4, wherein the light emitting indicator comprises a plurality of LEDs, and wherein the plurality of LEDs are illuminated in sequence as a plurality of intermediate heating times have elapsed.

6. The aerosol generating device of claim 3 or claim 4, wherein the light emitting indicator is controlled to progressively light an area of the light emitting indicator as the one or more intermediate temperatures are reached and/or when the one or more intermediate heating times have elapsed, and controlled to fully light the area of the light emitting indicator to signal the device is ready for use.

7. The aerosol generating device of any of claims 3 to 6, wherein the intermediate heating times span a time period of more than 15 seconds.

8. The aerosol generating device of any preceding claim, comprising:
at least one indicator (11-14) configured to indicate when the measured temperature has reached a use temperature and/or when an initialisation heating time has elapsed;
a memory (3) storing one or more rules, each rule defining an operating process of at least the indicator; and
control circuitry configured to select a rule stored in the memory (3) and operate at least the indicator (11-14) according to the selected rule, such that
the indicator (11-14) is operated to indicate when the measured temperature has reached a use temperature and/or when an initialisation heating time has elapsed, thereby signalling when the aerosol generating device is ready for use.

9. The aerosol generating device of claim 8, further comprising a user input operable to instruct the control circuitry to select a first rule or a second rule.

10. The aerosol generating device of claim 8 or claim 9, wherein the control circuitry is configured to select a rule according to one or more of:
the user input;
an initial starting temperature of the heater measured by the temperature measuring means;
a measured ambient temperature;
a remaining energy level of a battery of the aerosol generating device.

11. The aerosol generating device of claim 9 or claim 10, wherein the user input comprises more than one button.

12. The aerosol generating device of claim 11, wherein the user input comprises two buttons placed at different locations on the body of the aerosol generating device.

13. The aerosol generating device of any of claims 9 to 12, wherein the user input is positioned separately from the visual indicator.

14. The aerosol generating device of any preceding claim, wherein the visual indicator is activated every 5 seconds until the use temperature is reached.

15. The aerosol generating device of claim 14, wherein the use temperature is reached after 20 seconds.
